## Europäisches Patentamt

## European Patent Office

## Office européen des brevets

(11) Veröffentlichungsnummer: **0 252 362**
**B1**

(12) **EUROPÄISCHE PATENTSCHRIFT**

(19)

(45) Veröffentlichungstag der Patentschrift:
**09.05.90**

(21) Anmeldenummer: **87108971.0**

(22) Anmeldetag: **23.06.87**

(51) Int. Cl.⁵: **F16B 7/08**

(54) Vorrichtung zur lösbaren Verbindung eines Gestellelementes mit einem Beschlagteil.

(30) Priorität: **10.07.86 DE 3623228**

(43) Veröffentlichungstag der Anmeldung:
**13.01.88 Patentblatt 88/2**

(45) Bekanntmachung des Hinweises auf die Patenterteilung:
**09.05.90 Patentblatt 90/19**

(84) Benannte Vertragsstaaten:
**AT CH DE FR IT LI**

(56) Entgegenhaltungen:
**EP-A- 0 092 668**
**DE-A- 1 925 754**
**DE-A- 2 326 705**
**DE-B- 2 129 755**
**DE-C- 633 641**
**FR-A- 1 130 408**
**GB-A- 1 578 522**

(73) Patentinhaber: **Küttenbaum, Valentin, Ringelhauser Allee 14, D-7958 Laupheim(DE)**

(72) Erfinder: **Küttenbaum, Valentin, Ringelhauser Allee 14, D-7958 Laupheim(DE)**

(74) Vertreter: **Engelhardt, Guido, Dipl.-Ing., Patentanwalt Montafonstrasse 35 Postfach 1350, D-7990 Friedrichshafen 1(DE)**

## Beschreibung

Die Erfindung bezieht sich auf eine Vorrichtung zur lösbaren Verbindung eines Gestellelementes mit einem Beschlagteil, das beispielsweise an einer Platte oder dgl. befestigt ist, mittels zweier einander gegenüberliegend angeordneter Klemmbacken, die das Gestellelement umgreifen und an einem Ende mit dem Beschlagteil und an dem anderen Ende durch ein Spannmittel miteinander verbunden sind, wobei in die Enden des Beschlagteils jeweils eine mit einer Hinterschneidung ausgestattete Halterung eingearbeitet ist.

Eine Vorrichtung dieser Art zur Verbindung eines Gestellelementes mit einem Gestellbauteil ist durch die EP-A 0 092 668 bekannt. Das das Gestellbauteil aufnehmende Beschlagteil ist hierbei als Brücke ausgebildet, die an den Klemmbacken vorgesehene Vorsprünge umgreift und mittels des Spannmittels der Klemmbacken mit dem Gestellbauteil verspannbar ist. Diese Verbindungsvorrichtung hat sich zwar bewährt, da jedoch die Klemmbacken das Gestellelement vollständig umgeben und die auf der dem Spannmittel gegenüberliegenden Seite des Gestellelementes angeordnete Brücke sowohl das Gestellbauteil als auch die Enden der Klemmbacken aufnimmt, können die zu verbindenden Teile nur mit relativ großem Abstand zueinander angeordnet werden. Als nachteilig hat sich des weiteren herausgestellt, daß mitunter Verkantungen, bedingt durch die großen Hebelarme, auftreten. Und da die Verbindung der beiden Teile über die Brücke als Zwischenglied, die an dem Gestellelement nicht abgestützt ist, bewerkstelligt wird, ist eine hohe Elastizität, aber keine allzugroße Stabilität gegeben. Die Verwendbarkeit dieser bekannten Verbindungsvorrichtung ist somit eingeschränkt.

Aufgabe der Erfindung ist es daher, eine Vorrichtung zur lösbaren Verbindung eines Gestellelementes mit einem Beschlagteil der vorgenannten Gattung zu schaffen, die nicht nur klein baut und eine Anordnung des Beschlagteils unmittelbar neben dem Gestellelement ermöglicht, sondern die vor allem bei geringem Bauaufwand eine hohe Stabilität aufweist. Des weiteren soll erreicht werden, daß Elastizitäten weitgehend ausgeschaltet sind und daß Verkantungen und Kippmomente nahezu vermieden werden.

Gemäß der Erfindung wird dies dadurch erreicht, daß das Beschlagteil mit einer Ausnehmung zur teilweisen Aufnahme des Gestellelementes versehen ist, daß die Halterung in das Gestellelement teilweise umgreifenden Armen des Beschlagteils vorgesehen ist, in die die Klemmbacken mittels an diesen angeformter Nasen eingehängt sind, und daß die Ausnehmung so tief ist, daß die Halterungen in einem Bereich, der vor der Mitte des aufzunehmenden Gestellelementes verläuft, an den Armen des Beschlagteils einander gegenüberliegend angeordnet sind.

Die an den Armen des Beschlagteils vorgesehenen Halterungen sind in einfacher Ausgestaltung jeweils durch einen nach außen oder nach innen abstehenden Vorsprung zu bilden, dessen dem Beschlagteil zugewandte Anlagefläche für die an den Klemmbacken vorgesehenen Nasen zur Bildung der Hinterschneidung zur Längsachse des Spannmittels hin geneigt oder achsparallel zu dieser verlaufen können.

Vorteilhaft ist es ferner, wenn das die einander zugekehrten Enden der Klemmbacken verbindende Spannmittel achsparallel zu der durch die Halterungen gebildeten Ebene verläuft, die einander zugekehrten Enden der Klemmbacken mit geringem Abstand zueinander angeordnet und die Arme des Beschlagteils elastisch verformbar, beispielsweise durch in dieses von außen eingearbeiteter Schlitze, ausgebildet sind.

Nach einer Weiterbildung kann das Beschlagteil auf zwei einander gegenüberliegenden Seiten mit Ausnehmungen zur teilweisen Aufnahme zweier Gestellelemente und Halterungen für diese jeweils umgreifende Klemmbacken versehen werden, wobei die Ausnehmungen achsparallel zueinander verlaufend angeordnet werden können oder das Beschlagteil als Winkelstück mit winkelig zueinander verlaufenden Ausnehmungen oder in sich geschränkt ausgebildet sein kann.

Das Beschlagteil kann auch als Formstück aus einem dünnwandigen Material hergestellt sein.

Die gemäß der Erfindung ausgebildete Vorrichtung zur lösbaren Verbindung eines Gestellelementes mit einem Beschlagteil ist nicht nur einfach in der konstruktiven Ausgestaltung und somit ohne Schwierigkeiten in wirtschaftlicher Weise herstellbar, sondern auch einfach in der Handhabung und ermöglicht vor allem eine kompakte Bauweise und Anordnung von Bauteilen unmittelbar nebeneinander. Wird nämlich das Beschlagteil mit einer entsprechenden Ausnehmung versehen und werden an dessen Armen die Klemmbacken unmittelbar abgestützt, so umgreifen sämtliche an der Verbindung beteiligten Teile, nämlich das Beschlagteil und die Klemmbacken jeweils teilweise das Gestellelement, so daß eine unmittelbare Anlage an diesem, ohne daß ein Zwischenstück in Form einer Brücke erforderlich ist, gegeben ist. Elastizitäten und Verkantungen sind dadurch nahezu ausgeschlossen, auch sind die noch auftretenden Kippmomente gering. Die erfindungsgemäße Verbindungsvorrichtung weist demnach, obwohl diese klein baut, eine äußerst hohe Stabilität auf und ist hoch beanspruchbar. Eine vielseitige vorteilhafte Verwendbarkeit ist daher gegeben.

In der Zeichnung sind einige Ausführungsbeispiele der gemäß der Erfindung ausgebildeten Vorrichtung zur lösbaren Verbindung eines Gestellelementes mit einem Beschlagteil dargestellt, die nachfolgend im einzelnen erläutert sind. Hierbei zeigt:

Figur 1 die an einem Gestellbauteil angebrachte aus einem Beschlagteil und zwei Klemmbacken bestehende Verbindungsvorrichtung in Draufsicht,

Figur 2 eine vergrößerte ausschnittsweise Darstellung der Abstützung der Klemmbacken an dem Beschlagteil,

Figur 3 die Vorrichtung nach Figur 1 in perspektivischer Darstellung

Figur 4 eine andersartige Ausgestaltung der Vorrichtung nach Figur 1,

Figur 5 die Ausbildung des Beschlagteils bei der Vorrichtung nach Figur 1 zur Ankoppelung eines weiteren Gestellteils,

Figur 6 die Ausbildung des Beschlagteils nach Figur 5 als Winkelstück,

Figur 7 die Ausbildung des Beschlagteils nach Figur 5 als in sich geschränktes Bauteil und

Figur 8 ein als Formteil ausgebildetes Beschlagteil nach Figur 6.

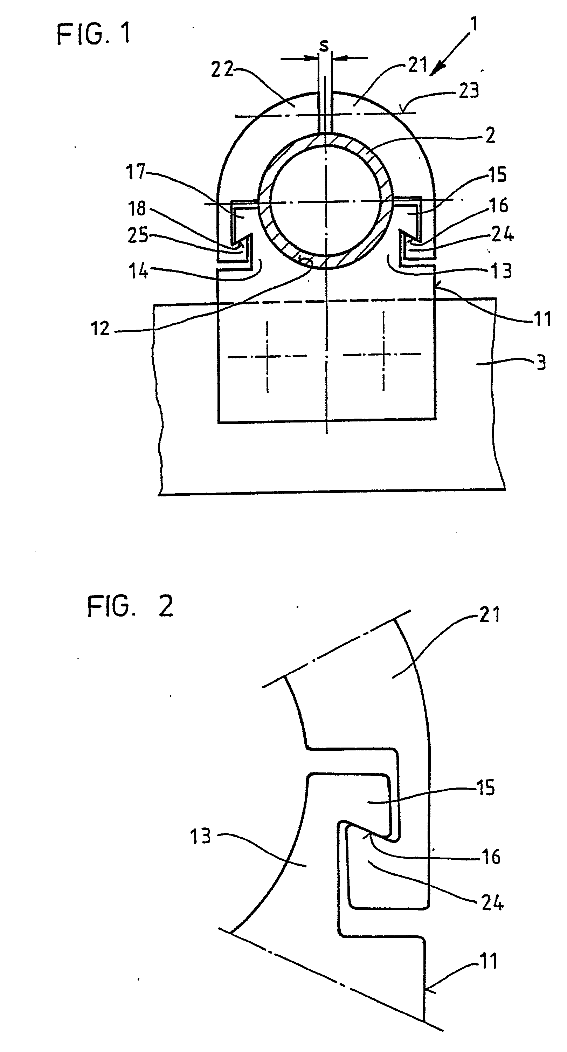

Die in Figur 1 dargestellte und mit 1 bezeichnete Vorrichtung dient zur lösbaren Verbindung eines Gestellelementes mit einem Beschlagteil 11, das z. B. an einem Boden 3 einer Wand befestigt ist, und besteht aus dem Beschlagteil 11 sowie zwei an diesem an einem Ende abgestützten Klemmbacken 21 und 22, die am anderen Ende mittels eines Spannmittels, z. B. einer Schraube, miteinander verbunden sind. Das Beschlagteil 11 ist dazu mit einer der äußeren Form des Gestellelementes 2 angepaßten Ausnehmung 13 versehen und an dessen dieses teilweise umgreifenden Armen 13 und 14 sind nach außen gerichtete Halterungen 15 und 16 angebracht, die jeweils eine in Richtung des Spannmittels 23 geneigt verlaufende Anlagefläche 16 und 18 aufweisen. Außerdem sind an den Klemmbacken 21 und 22 entsprechend gestaltete Nasen 24 und 25 angeformt, die die Halterungen 16 und 17 hintergreifen. Auf diese Weise sind Hinterschneidungen geschaffen, an denen sich die Klemmbacken 21 und 22 abstützen.

Zur Befestigung der Vorrichtung 1 an dem Gestellelement 2 ist lediglich das Beschlagteil 11 an dieses anzulegen und die vormontierten Klemmbacken 21 und 22 sind mit ihren Nasen 24 und 25 in die Halterungen 15 und 17 einzuschieben. Sodann kann mittels des Spannmittels 23, da die einander zugekehrten Enden der Klemmbacken 21 und 22 mit einem geringen Abstand S zueinander angeordnet sind, eine feste Verspannung der miteinander verbundenen Teile bewerkstelligt werden.

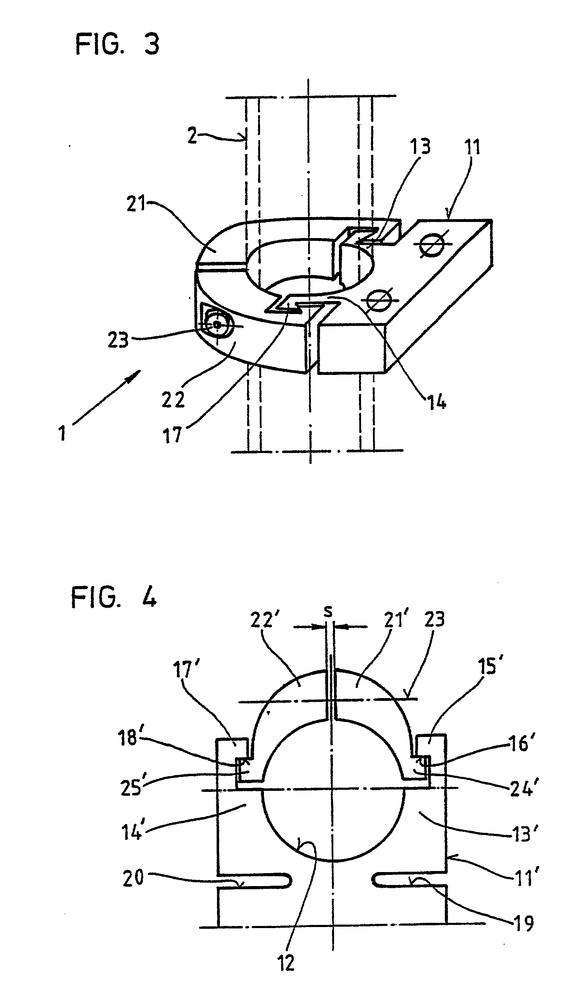

Bei der Vorrichtung 1' nach Figur 4 sind die an den Armen 13' und 14' des Beschlagteils 11' angeformten Halterungen 15' und 17' als nach innen gerichtete Vorsprünge ausgebildet, in die die Klemmbacken 21' und 22' mittels angeformter nach außen gerichteter Nasen 24' und 25' eingreifen. Auf diese Weise sind achsparallel zu dem Spannmittel 23 verlaufende Anlageflächen 16' und 18' gebildet, die ebenfalls als Hinterhakung wirken.

In das Bauteil 11' sind hierbei Schlitze 19 und 20 eingearbeitet, so daß dessen Arme 13' und 14' elastisch verformbar sind und sich besonders gut an ein in der Ausnehmung 12 aufgenommenes Gestellelement anlegen.

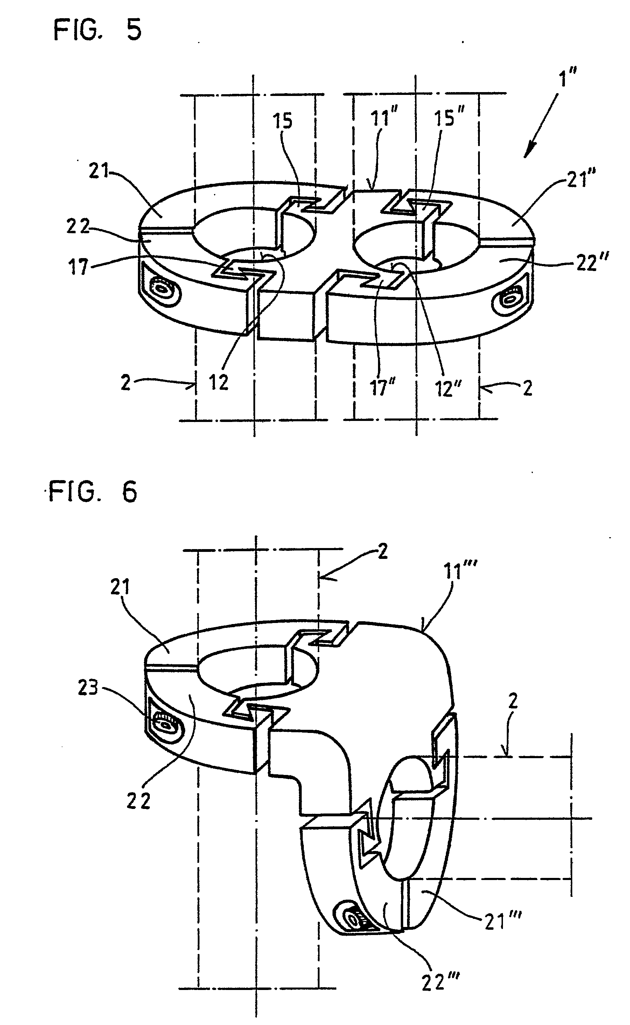

Bei der Vorrichtung 1" nach Figur 5 sind in das Beschlagteil 11" auf den einander gegenüberliegenden Seiten zwei Ausnehmungen 12 und 12" eingearbeitet, die achsparallel zueinander verlaufen. Außerdem sind, ebenfalls gegenüberliegend, an dem Beschlagteil 11" Halterungen 15 und 17 sowie 15" und 17" für in diese einzuhängende Klemmbacken 21, 22 bzw. 21", 22" vorgesehen. Auf diese Weise ist es möglich, zwei Gestellelemente dicht nebeneinander mit der Vorrichtung 1" lösbar miteinander zu verbinden.

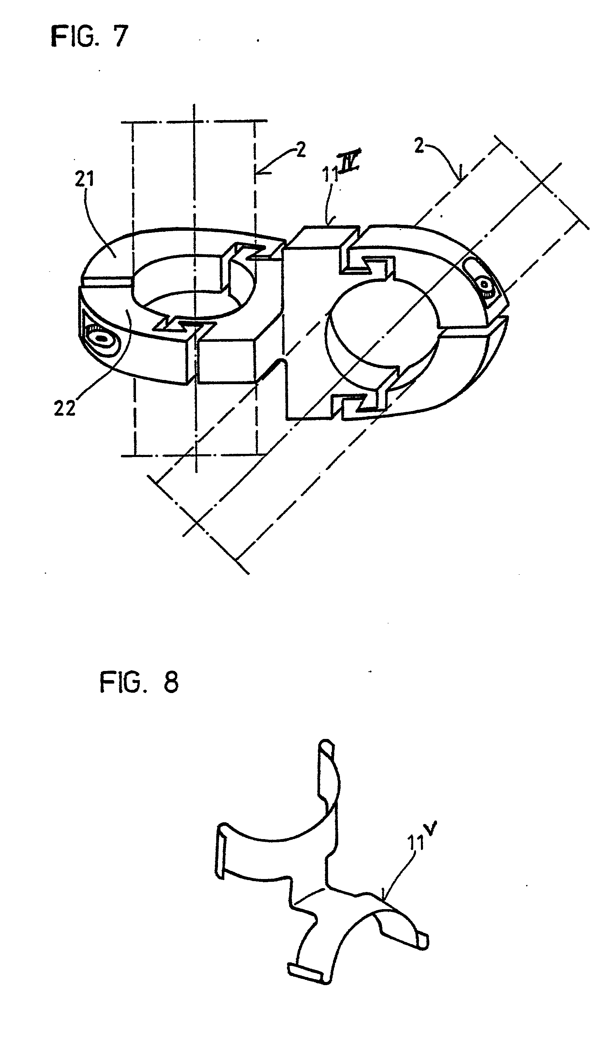

Gemäß den Figuren 6 und 7 sind die Beschlagteile 11'" bzw. 11IV, die in gleicher Weise wie das Beschlagteil 11" nach Figur 5 ausgebildet sind, als Winkelstück gestaltet bzw. dieses ist in sich geschränkt. Somit können Gestellelemente entsprechend den vorgewählten Winkellagen winkelig zueinander angeordnet werden.

Das ein- oder beidseitig zur Aufnahme von Gestellelementen vorgesehene Beschlagteil 11V kann, wie dies in Figur 8 gezeigt ist, in kostengünstiger Weise auch als Formteil ausgebildet werden.

**Patentansprüche**

1. Vorrichtung (1, 1', 1") zur lösbaren Verbindung eines Gestellelementes (2) mit einem Beschlagteil (11; 11'; 11"; 11'"; 11IV; 11V), das beispielsweise an einer Platte (3) oder dgl. befestigt ist, mittels zweier einander gegenüberliegend angeordneter Klemmbacken (21, 22; 21', 21"; 22"), die das Gestellelement (2) umgreifen und an einem Ende mit dem Beschlagteil (11; 11'; 11"; 11'"; 11IV; 11V) und an dem anderen Ende durch ein Spannteil (23) miteinander verbunden sind, wobei in die Enden des Beschlagteils (11; 11'; 11"; 11'"; 11IV; 11V) jeweils eine mit einer Hinterschneidung (Anlageflächen 16; 18; 16'; 18') ausgestattete Halterung (15; 17; 15'; 17') eingearbeitet ist, dadurch gekennzeichnet, daß das Beschlagteil (11; 11'; 11"; 11'"; 11IV; 11V) mit einer Ausnehmung (12) zur teilweisen Aufnahme des Gestellelementes (2) versehen ist, daß die Halterung (15; 17; 15'; 17') in das Gestellelement (2) teilweise umgreifenden Armen (13, 14; 13', 14') des Beschlagteils (11; 11') vorgesehen ist, in die die Klemmbacken (21, 22; 21', 22'; 21", 22") mittels an diesen angeformter Nasen (24; 25; 24'; 25') eingehängt sind, und daß die Ausnehmung (12) so tief ist, daß die Halterungen (15; 17; 15'; 17') in einem Bereich, der vor der Mitte des aufzunehmenden Gestellelementes (3) verläuft, an den Armen (13, 14; 13', 14') des Beschlagteils (11; 11') einander gegenüberliegend angeordnet sind.

2. Vorrichtung nach Anspruch 1, dadurch gekennzeichnet, daß die an den Armen (13, 14; 13', 14') des Beschlagteils (11, 11') vorgesehenen Halterungen (15; 17; 15'; 17') jeweils durch einen nach außen oder nach innen abstehenden Vorsprung gebildet sind, dessen dem Beschlagteil zugewandte Anlagefläche (16; 18; 16'; 18') für die an den Klemmbacken (21, 22; 21'; 22') vorgesehenen Nasen (24, 25; 24'; 25') zur Bildung der Hinterschneidung zur Längsachse des Spannmittels (23; 23') hin geneigt verlaufen.

3. Vorrichtung nach Anspruch 1 oder 2, dadurch gekennzeichnet, daß das die einander zugekehrten Enden der Klemmbacken (21; 22; 21'; 22'; 21"; 22") verbindende Spannmittel (23) achsparallel zu der durch die Halterungen (15; 17; 15'; 17') gebildeten Ebene verläuft.

4. Vorrichtung nach einem oder mehreren der Ansprüche 1 bis 3, dadurch gekennzeichnet, daß die einander zugekehrten Enden der Klemmbacken (21; 22; 21'; 22') mit geringem Abstand (S) zueinander angeordnet sind.

5. Vorrichtung nach einem oder mehreren der Ansprüche 1 bis 4, dadurch gekennzeichnet, daß die Arme (13'; 14') des Beschlagteils (11') elastisch verformbar, beispielsweise durch in dieses von außen eingearbeiteter Schlitze (19; 20), ausgebildet sind.

6. Vorrichtung nach einem oder mehreren der Ansprüche 1 bis 5, dadurch gekennzeichnet, daß das Beschlagteil (11″) auf zwei einander gegenüberliegenden Seiten mit Ausnehmungen (12; 12″) zur teilweisen Aufnahme zweier Gestellelemente (2) und Halterungen (15; 17; 15″; 17″) für diese jeweils umgreifende Klemmbacken (21; 22; 21″; 22″) versehen ist.

7. Vorrichtung nach Anspruch 6, dadurch gekennzeichnet, daß die Ausnehmungen (12; 12″) des Beschlagteils (11; 11″) achsparallel zueinander verlaufend angeordnet sind.

8. Vorrichtung nach Anspruch 6, dadurch gekennzeichnet, daß das Beschlagteil (11‴) als Winkelstück mit winkelig zueinander verlaufenden Ausnehmungen (12; 12‴) ausgebildet ist.

9. Vorrichtung nach Anspruch 6, dadurch gekennzeichnet, daß das Beschlagteil (11$^{IV}$) in sich geschränkt ausgebildet ist.

10. Vorrichtung nach einem oder mehreren der Ansprüche 6 bis 9, dadurch gekennzeichnet, daß das Beschlagteil (11$^{V}$) als Formstück aus einem dünnwandigen Material hergestellt ist.

**Revendications**

1. Dispositif (1, 1', 1″) de jonction amovible d'un élément de tréteau (2) avec une garniture (11; 11'; 11″; 11‴; 11$^{IV}$; 11$^{V}$) fixée par exemple sur une plaque (3) ou une pièce semblable, à l'aide de deux mors de serrage opposés (21, 22; 21', 21″; 22″) saisissant l'élément de tréteau (3) et liés sur une extrémité par la garniture (11; 11'; 11″; 11‴; 11$^{IV}$; 11$^{V}$) et sur l'autre par une pièce de serrage (23), les bouts de la garniture (11, 11'; 11″; 11‴; 11$^{IV}$; 11$^{V}$) portant respectivement un support (15; 17; 15'; 17') pourvu d'une contre-dépouille (plans de joint 16; 18; 16'; 18') se caractérisant par le fait que la garniture (11; 11'; 11″; 11″; 11$^{IV}$; 11$^{V}$) est munie d'un évidement (12) pour le logement partiel de l'élément de tréteau (2), que le support (15; 17; 15'; 17') est prévu dans des bras (13, 14; 13', 14') de la garniture (11; 11') saisissant partiellement l'élément de tréteau (2), dans lesquels les mors de serrage (21, 22; 21', 22'; 21″, 22″) sont accrochés par les nez (24; 25; 24'; 25') qui y sont pratiqués et que la profondeur de l'évidement (12) est telle que les supports (15; 17; 15'; 17') sont disposés en face l'un de l'autre aux bras (13, 14; 13', 14') de la garniture (11; 11'), à un endroit situé devant le centre de l'élément de tréteau (3) à loger.

2. Dispositif d'après la revendication 1 se caractérisant par le fait que les supports (15; 17; 15'; 17') prévus aux bras (13, 14; 13', 14') de la garniture (11, 11') sont formés respectivement par une saillie vers l'intérieur ou l'extérieur dont le plan de joint (16; 18; 16'; 18') face à la garniture est incliné vers l'axe longitudinal de l'élément de serrage (23; 23') afin de former la contre-dépouille pour les nez (24, 25; 24'; 25') prévus sur les mors de serrage (21, 22; 21'; 22').

3. Dispositif d'après les revendications 1 ou 2 se caractérisant par le fait que l'élément de serrage (23) liant les extrémités s'opposant des mors de serrage (21; 22; 21'; 22'; 21″; 22″) est dirigé en parallèle à l'axe du plan formé par les supports (15; 17; 15'; 17').

4. Dispositif d'après une ou plusieurs des revendications 1 à 3 se caractérisant par le fait que les extrémités s'opposant des mors de serrage (21; 22; 21'; 22') sont disposés avec un faible écartement (S) entre elles.

5. Dispositif d'après une ou plusieurs des revendications 1 à 4 se caractérisant par le fait que les bras (13'; 14') de la garniture (11') permettent une déformation élastique, p. ex. par des fentes (19; 20) qui y sont pratiquées de l'extérieur.

6. Dispositif d'après une ou plusieurs de revendications 1 à 5 se caractérisant par le fait que sur deux faces s'opposant, la garniture (11″) est pourvue d'évidements (12; 12″) pour le logement partiel de deux éléments de tréteau (2) et de supports (15; 17; 15″; 17″) pour les mors de serrage (21; 22; 21″, 22″) qui les saisissent respectivement.

7. Dispositif d'après la revendication 6 se caractérisant par le fait que les axes des évidements (12; 12″) de la garniture (11; 11″) sont disposés en direction parallèle.

8. Dispositif d'après la revendication 6 se caractérisant par le fait que la garniture (11‴) est conçue en tant que pièce angulaire avec des évidements (12; 12‴) qui forment un angle l'un par rapport à l'autre.

9. Dispositif d'après la revendication 6 se caractérisant par le fait que la garniture (11$^{IV}$) est formée par un élément croisé.

10. Dispositif d'après une ou plusieurs des revendications 6 à 9 se caractérisant par le fait que la garniture (11$^{V}$) est réalisée par une pièce profilée en matériau à paroi fine.

**Claims**

1. Device (1, 1', 1″) for detachable joining of a frame member (2) with a mounting (11; 11'; 11″; 11‴; 11$^{IV}$; 11$^{V}$) which can for example be mounted on a base plate (3) or similar item by means of two diametrically opposed clamping chucks (21, 22; 21'; 21″, 22″) which surround the frame member (2) and which are connected at one end by the mounting (11; 11'; 11″; 11‴; 11$^{IV}$; 11$^{V}$) and at the other end by a fastener (23), whereby one support (15, 17; 15', 17') provided with a recess (locating faces 16, 18; 16', 18') is incorporated into each end of the mounting (11; 11'; 11″; 11‴; 11$^{IV}$; 11$^{V}$) characterized in that the mounting (11; 11'; 11″; 11‴; 11$^{IV}$; 11$^{V}$) is provided with an opening (12) to partially locate the frame member, (2) in that the support (15, 17; 15', 17') is provided with arcuate arms (13, 14; 13', 14') on the mounting (11; 11') which partially enclose the frame member (2) into which the clamping chucks (21, 22; 21', 22'; 21″, 22″) locate by means of the projections (24, 25; 24', 25') formed on their inner surface and in that the opening (12) is so deep that the supports (15, 17; 15', 17') on the arms (13, 14; 13', 14') of the mounting (11; 11') can be diametrically opposed to one another in an area located in front of the centre of the frame member (3) which receives them.

2. Device according to claim 1 characterized in that each of the supports (15, 17; 15', 17') on the arms (13, 14; 13', 14') of the mounting (11; 11') is arranged with a protrusion facing either inwards or outwards with locating faces (16, 18; 16', 18') which point towards the mounting to receive the projections (24, 25; 24', 25') on the clamping chucks (21, 22; 21', 22') in turn creating and being aligned relative to the recess for the longitudinal axis of the fastener (23; 23').

3. Device according to claim 1 or 2 characterized in that the fastener (23) linking the adjacent ends of the clamping chucks (21, 22; 21', 22'; 21", 22") is arranged parallel to the plane created by the support (15, 17; 15', 17').

4. Device according to one or more of claims 1 to 3 characterized in that the adjacent ends of the clamping chucks (21, 22; 21', 22') are arranged with only a small gap (S) between them.

5. Device according to one or more of claims 1 to 4 characterized in that the arms (13'; 14') of the mounting (11') can be flexibly distorted, for example within the slots (19; 20) incorporated in the mounting (11').

6. Device according to one or more of claims 1 to 5 characterized in that the mounting (11") is equipped with openings (12; 12") on two opposing sides for the partial location of two frame members (2) and with supports (15, 17; 15', 17') for the clamping chucks (21, 22; 21', 22') which surround each of these.

7. Device according to claim 6 characterized in that the openings (12; 12") in the mounting (11; 11") are arranged parallel to one another.

8. Device according to claim 6 characterized in that the mounting (11''') is arranged as an angle piece with openings (12; 12''') set at an angle to one another.

9. Device according to claim 6 characterized in that the mounting (11$^{IV}$) is arranged with angled axes.

10. Device according to one or more of claims 6 to 9 characterized in that the mounting (11$^{V}$) is manufactured as a shaped part from thin-walled material.

FIG. 1

FIG. 2

FIG. 3

2

21

13

11

23

22

17

1

14

FIG. 4

22'

S

21'

23

17'

15'

18'

16'

25'

24'

14'

13'

20

11'

19

12

FIG. 5

FIG. 6

FIG. 7

FIG. 8